# EUROPÄISCHE PATENTANMELDUNG

(11) **EP 2 362 034 A2**
(43) Veröffentlichungstag der Anmeldung: **31.08.2011**
(21) Anmeldenummer: 11001396.8
(22) Anmeldetag: 21.02.2011
(51) Int. Cl.: E04F 13/08

(54) **Anordnung zur Befestigung zumindest einer Platte an einer Gebäudewand**

(30) Priorität: 25.02.2010 AT 2992010
(71) Anmelder: Lenz, Bernhard, 6858 Schwarzach (AT)
(72) Erfinder: Lenz, Bernhard, 6858 Schwarzach (AT)
(74) Vertreter: Fechner, Thomas

(57) **Zusammenfassung**

Anordnung zur Befestigung zumindest einer Platte (1) an einer Gebäudewand (2) zur Ausbildung einer Gebäudefassade, wobei die Anordnung zumindest einen Tragkörper (3) , an dem die Platte (1) befestigbar ist, aufweist und der Tragkörper (3) eine rahmenlose Konstruktion ist und zumindest eine Befestigungsvorrichtung (4) aufweist, mit der er an der Gebäudewand (2) befestigbar ist, wobei der Tragkörper (3) zumindest einen Frontanschlag (5) für die Platte (1) und zumindest einen Rückanschlag (6) für die Platte (1) aufweist und die Platte (1) zwischen dem Frontanschlag (5) und dem Rückanschlag (6) anordenbar, insbesondere einklemmbar, ist, wobei der Tragkörper (3) zumindest eine Verstelleinrichtung (7) aufweist, wobei mit der Verstelleinrichtung (7), vorzugsweise stufenlos, verschiedene Abstände (19) zwischen dem Frontanschlag (5) und dem Rückanschlag (6) einstellbar und fixierbar sind.

## Beschreibung

Die vorliegende Erfindung betrifft eine Anordnung zur Befestigung zumindest einer Platte an einer Gebäudewand zur Ausbildung einer Gebäudefassade, wobei die Anordnung zumindest einen Tragkörper, an dem die Platte befestigbar ist, aufweist und der Tragkörper eine rahmenlose Konstruktion ist und zumindest eine Befestigungsvorrichtung aufweist, mit der er an der Gebäudewand befestigbar ist, wobei der Tragkörper zumindest einen Frontanschlag für die Platte und zumindest einen Rückanschlag für die Platte aufweist und die Platte zwischen dem Frontanschlag und dem Rückanschlag anordenbar, insbesondere einklemmbar, ist.

Beim Stand der Technik sind z.B. aus der DE 42 28 661 A1 Rahmenkonstruktionen zur Befestigung von Platten an Gebäudewänden bekannt.

In der modernen Architektur werden immer häufiger Gebäudefassaden durch die Verkleidung von Gebäudewänden mit Platten ausgebildet. Zur Befestigung der Platten an der Gebäudewand sind verschiedene gattungsgemäße Anordnungen bzw. Systeme bekannt. Häufig werden unterschiedliche Platten verwendet, um die Gebäudefassade auszubilden. So kann es z.B. vorgesehen sein, als Platten zum Teil bzw. bereichsweise Solarpaneele zur Erzeugung von elektrischem Strom und/oder Warmwasser vorzusehen und Bereiche zwischen oder benachbart zu diesen Solarpaneelen in der selben Gebäudefassade mit anderen Platten z.B. aus Glas, Blech, Holz, Zement, Stein oder verschiedenen Verbundwerkstoffen zu verkleiden. Ein Problem ist dabei, dass diese verschiedenartigen Platten in der Regel unterschiedliche Dicken aufweisen. So sind Solarpaneele in der Regel einige cm dick, während z.B. Glas- oder Metallplatten häufig auch Dicken kleiner 1cm aufweisen. Im Sinne einer gleichmäßigen bzw. möglichst ebenen Außenfläche der Gebäudefassade ist es wünschenswert, dass die von der Gebäudewand abgewandten Oberflächen der verschiedenartigen Platten zumindest in sich über mehrere Platten erstreckenden Teilbereichen der Fassade in einer gemeinsamen Ebene liegen.

Aus der DE 296 02 772 U1, der DE 201 07 121 U1 und der DE 197 51 820 A1 sind gattungsgemäße rahmenlose Anordnungen bekannt, bei denen Federungen eine gewisse Anpassung an die Dicke der Platte erlauben.

Aufgabe der Erfindung ist es, eine gattungsgemäße Anordnung dahingehend auszubilden, dass es möglich wird, auf einfache und schnell montierbare Art und Weise auch aus stark unterschiedlich dicken Platten eine stabile nach außen hin ebene Gebäudefassade auszubilden.

Dies wird erfindungsgemäß erreicht, indem der Tragkörper zumindest eine Verstelleinrichtung aufweist, wobei mit der Verstelleinrichtung, vorzugsweise stufenlos, verschiedene Abstände zwischen dem Frontanschlag und dem Rückanschlag einstellbar und fixierbar sind.

Durch die Verstellbarkeit des Abstandes zwischen dem Frontanschlag, also dem frontseitig bezüglich der Platte angeordneten Anschlag, und dem Rückanschlag, also dem rückseitig bezüglich der Platte angeordneten Anschlag, des Tragkörpers wird es möglich, verschieden dicke Platten so zwischen Frontanschlag und Rückanschlag anzuordnen, dass sie mit ihren von der Gebäudewand abgewandten Oberflächen, also nach außen, in einer gemeinsamen Ebene liegen.

Durch die Fixierbarkeit der Verstelleinrichtung kann der Abstand zwischen Front-und Rückanschlag nach der Einstellung bzw. Anpassung an die Dicke der Platte fixiert werden, womit eine besonders stabile Befestigung der Platte erreicht wird. Weiters können mit entsprechenden einstell- und fixierbaren Verstelleinrichtungen auch sehr verschieden dicke Platten stabil befestigt werden, da nicht wie beim Stand der Technik die Federwege der Rückanschläge berücksichtigt werden müssen. Besonders bevorzugt ist vorgesehen, dass der Abstand zwischen Frontanschlag und Befestigungsvorrichtung fix, also unverstellbar ist. Dies muss aber nicht zwingend so sein, so ist es auch denkbar diesen Abstand zwischen Frontanschlag und Befestigungsvorrichtung variabel einstellbar zu gestalten, um Unebenheiten in der Gebäudewand ausgleichen zu können.

Günstigerweise ist dabei vorgesehen, dass in der Montagestellung der Anordnung, also im fertig montieren Zustand der Gebäudefassade an der Gebäudewand, der Frontanschlag auf der von der Gebäudewand abgewandten Seite der Platte und der Rückanschlag auf der der Gebäudewand zugewandten Seite der Platte angeordnet ist.

Der Begriff der Gebäudewand ist weit auszulegen. Es muss sich auf keinen Fall zwingend um eine geschlossene Wand handeln. Erfindungsgemäße Anordnungen können vor nahezu allen Arten von Gebäudewänden zur Montage der Platten der Gebäudefassade verwendet werden. Dies können Wände aus Ziegel, Holz, Beton, Gipskarton, Lehm, Verbundwerkstoffen oder sonstige Wände sein. Unter Gebäudewand kann auch ein entsprechendes Gerüst oder dgl. verstanden werden. Es kann sich bei der Gebäudewand um eine vertikal stehende Wand, eine horizontal liegende Decke, ein Dach oder einen Boden, aber auch um schräge Wände bzw. Flächen oder Dächer handeln. Das Gleiche gilt für die Gebäudefassade, auch diese kann vertikal, horizontal oder in einem beliebigen anderen Winkel zur Horizontalen liegen. Es ist auch denkbar, dass die Gebäudefassade verschiedene Abschnitte hat, in denen sie dann vertikal, horizontal oder schräg zur Horizontale liegt. Als Gebäudefassade kann auch das Dach eines Gebäudes oder Teile davon angesehen werden. Die Platten können mittels der erfindungsgemäßen Anordnung in dem jeweiligen ebenen Bereich der Gebäudefassade mit ihren von der Gebäudewand abgewandten Oberflächen in einer gemeinsamen Ebene angeordnet werden. Bei der Gebäudefassade handelt es sich insbesondere um Außenfassaden und damit um die von außen sichtbare Außenhaut eines Gebäudes. Natürlich können erfindungsgemäße Anordnungen aber auch für Innenfassaden und dgl. zur Befestigung von Platten verwendet werden.

Bei den Gebäudefassaden handelt es sich um rahmenlose Konstruktionen. Die Tragkörper, an denen die Platten befestigt sind, sind rahmenlose Konstruktionen. Dies ermöglicht es, besonders optisch ästhetische Gebäudefassaden zu gestalten, da auf Grund der rahmenlosen Ausführung von außen nur noch die von der Gebäudewand abgewandten Seiten der Platten und die Frontanschläge, an denen sich die Platten mit ihrer von der Gebäudewand abgewandten Seite abstützen, zu sehen sind.

Der oder die Tragkörper können mittels der Befestigungsvorrichtung direkt an der Gebäudewand fixiert werden. Andere Ausgestaltungsformen der Erfindung sehen eine indirekte Befestigung der Tragkörper mittels der Befestigungsvorrichtungen an der Gebäudewand vor. So ist es z.B. denkbar, die Tragkörper mittels ihrer Befestigungsvorrichtung an einem an der Gebäudewand fixierten Gerüst oder entsprechenden Schienen oder dgl. zu befestigen.

Die Frontanschläge liegen günstigerweise den Rückanschlägen gegenüber, sodass zwischen Rückanschlag und Frontanschlag die jeweilige Platte angeordnet, vorzugsweise eingeklemmt, werden kann. Der Frontanschlag ist in bevorzugten Ausgestaltungsformen als Teil eines Hakens ausgebildet. Der Rückanschlag kann z.B. als Leiste ausgeführt bzw. ausgebildet sein. Der Tragkörper kann einen oder mehrere Grundkörper aufweisen, welche, vorzugsweise jeweils, eine oder mehrere Befestigungsvorrichtungen aufweisen. Um die Verstellbarkeit des Abstandes zwischen Frontanschlag und Rückanschlag zu gewährleisten, ist vorgesehen, dass der Rückanschlag mittels der Verstelleinrichtung relativ zum Grundkörper in verschiedenen Positionen einstellbar und fixierbar ist. Der oder die Frontanschläge können fix an dem oder den Grundkörpern des Tragkörpers angeordnet sein. Hierdurch wird in einfacher Weise z.B. gewährleistet, dass der Abstand zwischen Frontanschlag und Befestigungsvorrichtung fix, also unveränderbar ist. Es ist, wie bereits erläutert, aber auch möglich die Frontanschläge verstellbar am jeweiligen Grundkörper anzuordnen, z.B. um Unebenheiten der Gebäudewand ausgleichen zu können.

Um den Tragkörper samt Platte in einfacher Art und Weise an der Gebäudewand montieren bzw. befestigen zu können sehen bevorzugte Ausgestaltungsformen der Erfindung vor, dass die Befestigungsvorrichtung als Schwenkgelenk oder als Teil eines Schwenkgelenkes ausgebildet ist oder zumindest ein Schwenkgelenk aufweist. Bei diesen Ausgestaltungsformen ist in weiter bevorzugten Ausführungsvarianten vorzugsweise vorgesehen, dass der Tragkörper zusätzlich zumindest eine zweite Befestigungseinrichtung aufweist und die zweite Befestigungseinrichtung als eine Verriegelungseinrichtung oder als Teil einer Verriegelungseinrichtung ausgebildet ist oder zumindest eine Verriegelungseinrichtung aufweist.

Zusätzlich zu den erfindungsgemäßen Anordnungen an sich bezieht sich die Erfindung auch auf eine Gebäudefassade mit zumindest einer Platte, vorzugsweise mit mehreren Platten, welche, vorzugsweise jeweils, mit zumindest einer erfindungsgemäßen Anordnung an einer Gebäudewand befestigt ist. Im Sinne der Erfindung ist dabei günstigerweise vorgesehen, dass die Platte oder zumindest eine der Platten ein Solarpaneel zur Erzeugung von elektrischem Strom und/oder von Warmwasser ist und/oder dass zumindest einige der Platten verglichen miteinander unterschiedliche Dicken aufweisen und ihre von der Gebäudewand abgewandten Oberflächen in einer gemeinsamen Ebene liegen.

Weitere bevorzugte Merkmale von erfindungsgemäßen Ausgestaltungsformen werden in der Figurenbeschreibung anhand eines Ausführungsbeispiels erläutert. Es zeigen:
Fig. 1 einen schematisiert dargestellten Anblick von außen auf eine erfindungsgemäß ausgebildete Gebäudefassade;
Fig. 2 und 3 Längsschnitte durch die Platten und die Gebäudewand sowie die erfindungsgemäße Anordnung dieses Ausführungsbeispiels;
Fig. 4 bis 6 zeigen die Tragkörper des gezeigten erfindungsgemäßen Ausführungsbeispiels, wobei zur Aufnahme verschieden dicker Platten, verschiedene Abstände zwischen Frontanschlag und Rückanschlag eingestellt sind und
Fig. 7 einen Detailschnitt entlang der Schnittlinie 21 aus Fig. 3.

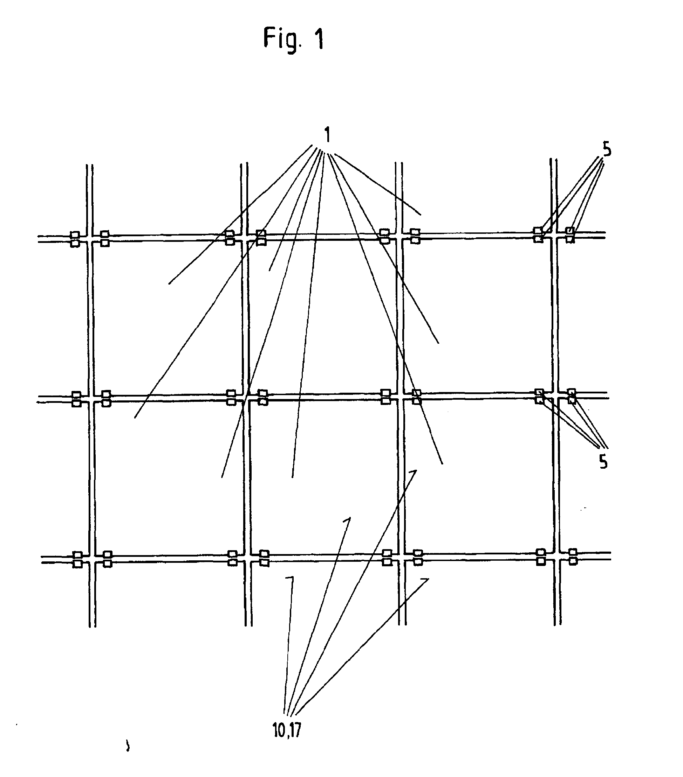

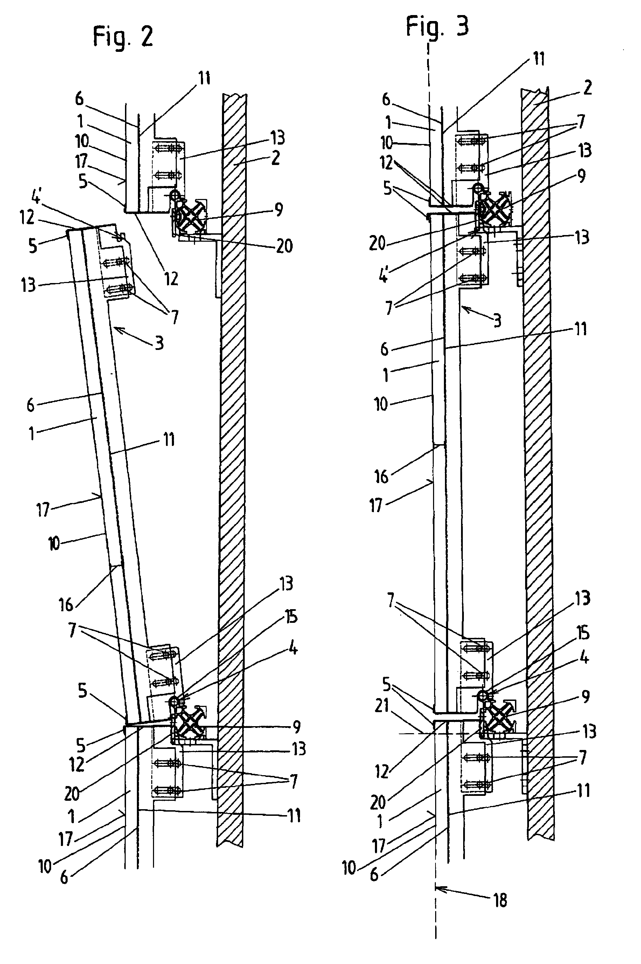

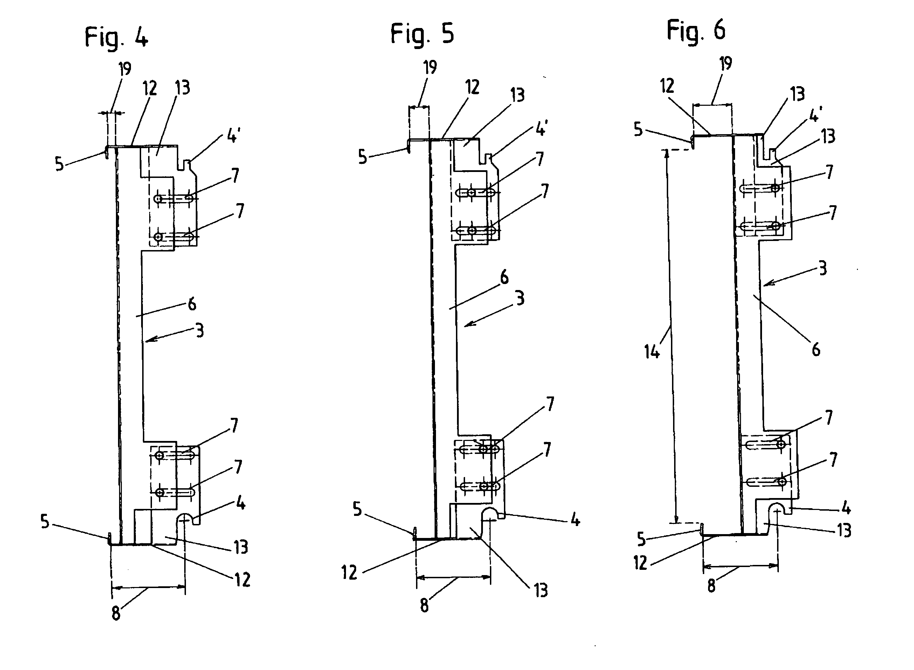

Fig. 1 zeigt schematisiert einen Ausschnitt einer erfindungsgemäß ausgebildeten Gebäudefassade, bei der die einzelnen, die Gebäudefassade ausbildenden Platten 1 mittels erfindungsgemäßer Anordnungen bzw. Tragkörper 3 an der verkleideten und damit nicht mehr von außen sichtbaren Gebäudewand 2 befestigt sind. Von den Tragkörpern 3 sind nur die Frontanschläge 5 sichtbar, an welchen die Platten 1 mit ihren von der Gebäudewand 2 abgewandten Seiten 10 bzw. den von der Gebäudewand 2 abgewandten Oberflächen 17 abgestützt sind. Die Frontanschläge 5 verhindern, dass die Platten 1 von der Fassade abfallen können und ermöglichen es, die Gebäudefassade in der Vertikalen, Horizontalen aber auch in sonstigen Winkeln auszubilden. Weiters wird durch die Frontanschläge 5 in der gezeigten Form eine rahmenlose Konstruktion möglich, welche eine besonders ästhetische Gestaltung der Gebäudefassaden zulässt. Bei den Platten 1 kann es sich um unterschiedliche Platten aus unterschiedlichen Materialien mit unterschiedlichen Dicken 16 handeln. So können z.B. einige der Platten 1 als Solarpaneele zur Erzeugung von elektrischem Strom und/oder Warmwasser ausgebildet sein, während es sich bei benachbarten Platten um Blech-, Holz-, Stein-, Zement-, Verbund- oder Glasplatten oder dgl. handeln kann. Auf Grund der Verwendung von erfindungsgemäßen Anordnungen zur Befestigung der Platten 1 an der Gebäudewand 2 wird es möglich, trotz unterschiedlicher Dicken der Platten, deren von der Gebäudewand 2 abgewandte Oberflächen 17 in einer gemeinsamen Ebene 18 anzuordnen. Diese gemeinsame Ebene 18 ist in Fig. 3 dargestellt. In den Fig. 2 und 3, welche einen Längs- bzw. Vertikalschnitt durch die Gebäudefassade in Fig. 1 in einer zum Zeichnungsblatt der Fig. 1 orthogonalen Ebene zeigen, sind die gezeigten Platten 1 gleich dick. Dies muss aber auf Grund der erfindungsgemäßen Ausbildung der Tragkörper 3 bzw. der erfindungsgemäßen Anordnung nicht zwingend so sein. Dies wird anhand der Fig. 4 bis 6 veranschaulicht. In jeder dieser Fig. ist ein Tragkörper 3 dargestellt. In Fig. 4 ist ein vergleichsweise kleiner Abstand 19 zwischen Frontanschlag 5 und Rückanschlag 6 eingestellt. Dieser Abstand 19 wird gewählt, wenn relativ dünne Platten 1 am Tragkörper 3 befestigt werden sollen. Fig. 5 zeigt einen mittleren Abstand 19 für mitteldicke Platten und Fig. 6 zeigt einen großen Abstand 19 zwischen Frontanschlag 5 und Rückanschlag 6, welcher gewählt wird, wenn entsprechend dicke Platten 1 zwischen Frontanschlag 5 und Rückanschlag 6 angeordnet bzw. eingeklemmt werden sollen. Trotz dieser verschiedenen Abstände 19 in den Fig. 4, 5 und 6 ist bei allen Einstellungen der Abstand 8 zwischen Frontanschlag 5 und Befestigungsvorrichtung 4 gleich groß, was sicherstellt, dass die von der Gebäudewand 2 abgewandten Oberflächen 17 der einzelnen Platten 1 trotz ihrer verschiedenen Dicken 16 in der gemeinsamen Ebene 18 der Gebäudefassade liegen.

Die Tragkörper 3 des gezeigten Ausführungsbeispiels weisen jeweils zwei voneinander getrennte Grundkörper 13 auf. Dies ist natürlich nur eine Ausgestaltungsvariante. Es kann sich auch um einen durchgehenden einstückigen Grundkörper 13 oder mehr als zwei Grundkörper 13 handeln. An den Grundkörpern 13 der gezeigten Variante ist jedenfalls jeweils eine Befestigungsvorrichtung 4 bzw. 4' angeordnet, welche der direkten oder indirekten Befestigung des Tragkörpers 3 an der Gebäudewand 2 dient. Die Frontanschläge 5 sind im gezeigten Ausführungsbeispiel jeweils als Teil eines Hakens 12 ausgebildet und fix am jeweiligen Grundkörper 13 angeordnet. Die Rückanschläge 6 sind im gezeigten Ausführungsbeispiel als Leisten ausgebildet. Um die Abstände 19 zwischen Frontanschlag 5 und Rückanschlag 6 verändern bzw. einstellen zu können, sind die Verstelleinrichtungen 7 vorgesehen, mit denen die relative Position zwischen Rückanschlag 6 und den Grundkörpern 13 verändert bzw. eingestellt werden kann, um so verschiedene Abstände 19 zwischen Frontanschlag 5 und Rückanschlag 6 einstellen zu können. Die Verstelleinrichtungen 7 erlauben ein Fixieren eines einmal eingestellten Abstandes und dadurch auch ein Einklemmen der jeweiligen Platte 1 zwischen Frontanschlag 5 und Rückanschlag 6. Im gezeigten Ausführungsbeispiel handelt es sich bei den Verstelleinrichtungen 7 um Langlöcher, durch die Klemmschrauben hindurchgeführt sind. Sind die Klemmschrauben geöffnet, so kann die relative Position zwischen Grundkörper 13 und Rückanschlag 6 verstellt werden. Ist der gewünschte Abstand 19 zwischen Frontanschlag 5 und Rückanschlag 6 eingestellt bzw. die Platte 1 eingeklemmt, so können die Spannschrauben wieder geschlossen werden, womit der Abstand 19 fixiert ist. Natürlich können bei erfindungsgemäßen Ausführungsbeispielen aber auch alle anderen beim Stand der Technik bekannten, für diesen Zweck verwendbaren Verstelleinrichtungen 7 anstelle der dargestellten Langloch-Spannschraubenkombination verwendet werden.

Im gezeigten Ausführungsbeispiel weist ein jeweiliger Tragkörper 3 zwei, in einander entgegengesetzten Endbereichen des Tragkörpers 3 angeordnete Frontanschläge 5 auf. Im Bereich zwischen den Frontanschlägen 5 ist der Rückanschlag 6 angeordnet. Um die Platte 1 von hinten möglichst vollflächig abzustützen und damit auch zu stabilisieren, ist günstigerweise vorgesehen, dass der Rückanschlag sich über zumindest 50%, vorzugsweise über zumindest 80%, des Abstands 14 zwischen den beiden Frontanschlägen 5 erstreckt.

Die Verstellbarkeit der Abstände 19 kann bei erfindungsgemäßen Ausführungsformen über einen großen Bereich ausgeführt sein. So kann z.B. vorgesehen sein, dass die Abstände 19 zwischen 1 mm und 120mm, vorzugsweise zwischen 6mm und 40mm, verstellbar sind. Im gezeigten Ausführungsbeispiel wird dies in einfacher Art und Weise erreicht, indem man die Verstelleinrichtung 7 mit entsprechend langen Langlöchern ausbildet.

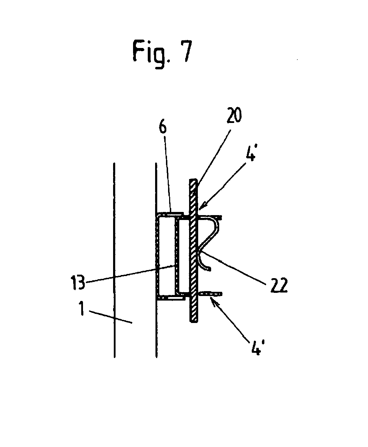

Im gezeigten Ausführungsbeispiel ist eine der Befestigungsvorrichtungen 4 eines Tragkörpers 3 jeweils als Teil eines Schwenkgelenkes 15 ausgebildet. Dies ermöglicht es, wie in Fig. 2 zu sehen, den bzw. die, im gezeigten Ausführungsbeispiel pro Platte zwei, Tragkörper 3 mit fertig darin montierter Platte 1 mittels der Befestigungsvorrichtung 4 in eine das Gegenstück des Schwenkgelenkes 15 tragende und an der Gebäudewand 2 in geeigneter Art und Weise befestigte Schiene 9 einzuhängen. Anschließend kann diese Platte 1 samt Tragkörper(n) 3 von der in Fig. 2 gezeigten in die in Fig. 3 gezeigte Position verschwenkt werden. Anschließend wird im gezeigten Ausführungsbeispiel die zweite, als Verriegelungseinrichtung ausgebildete Befestigungseinrichtung 4' geschlossen, womit die Platte 1 fertig an die Gebäudewand 2 montiert ist. Im gezeigten Ausführungsbeispiel ist als Teil der Verriegelungseinrichtung der Befestigungsvorrichtung 4' am entsprechenden Grundkörper 13 des Tragkörpers 3 eine Nut ausgebildet, in die im fertig montierten Zustand der Riegel 20 eingreift. Der Riegel 20 ist in geeigneter Art und Weise z.B. durch Festschrauben an der Schiene 9 befestigt. Der Riegel 20 kann schwenkbar ausgebildet sein, um in die Nut der Befestigungsvorrichtung 4' eingeschwenkt werden zu können. Es ist aber als anderes Beispiel auch möglich, den Riegel 20 als Platte auszubilden, damit er zunächst in die Nut der Befestigungsvorrichtung 4' eingesetzt werden kann und nach Verschwenken des Tragkörpers 3 in die in Fig. 3 gezeigte Endposition an der Schiene 9 z.B. durch Verschrauben befestigt wird. Um den Riegel 20 zu verschwenken oder an der Schiene 9 fest zu schrauben, kann ein entsprechendes Werkzeug, wie z.B. ein Schraubenzieher, in den jeweiligen Spalt zwischen den Platten 1 bzw. Frontanschlägen 5 eingeführt werden. Fig. 7 zeigt in einem schematisierten Schnitt entlang der Schnittlinie 21 aus Fig. 3 als Beispiel wie der Riegel 20 in der Nut der Befestigungsvorrichtung 4' spielfrei gestellt werden kann. Dies dient dazu, dass die Platte sich im fertig montierten Zustand also bei geschlossener Befestigungsvorrichtung 4' nicht mehr bewegt bzw. spielfrei befestigt ist. Im gezeigten Ausführungsbeispiel wird dies durch die am Grundkörper 13 befestigte Vorspannfeder 22 erreicht, welche den Riegel 20 gegen eine der Begrenzungen der Nut der Befestigungsvorrichtung 4' drückt bzw. vorspannt. Natürlich sind auch andere beim Stand der Technik bekannte Verriegelungseinrichtungen und/oder Spielfreistellungen anstelle des gezeigten Ausführungsbeispiels der Befestigungsvorrichtung 4' entsprechend anwendbar. Es kann sich um beliebige schnapp-, klemm-, schraubbare oder sonstige geeignete Verriegelungseinrichtungen mit oder ohne Spielfreistellung handeln. Auch die Art der Befestigung der Schienen 9 an der Gebäudewand kann in verschiedensten beim Stand der Technik bekannten Formen realisiert sein. Es muss nicht zwingend auf die in den Fig. 2 und 3 sichtbaren Winkeleisen zurückgegriffen werden, um die Schienen 9 an der Gebäudewand 2 zu befestigen.

Wie insbesondere in den Fig. 2 und 3 zu sehen, sind die Tragkörper 3 beim gezeigten Ausführungsbeispiel mittels der Befestigungsvorrichtung 4 und 4' indirekt, also über die Schienen 9 an der Gebäudewand 2 befestigt. Dies ist allerdings nur eine bevorzugte Ausgestaltungsform. Es kann auch vorgesehen sein, die Befestigungsvorrichtung 4 und 4' so auszubilden, dass sie den Tragkörper 3 und damit die Platte 1 direkt an der Gebäudewand 2 befestigen. So könnten z.B. die Befestigungsvorrichtungen 4 und 4' über die Platten überstehen und Löcher aufweisen, mittels derer sie an die Gebäudewand 2 angeschraubt werden können, um nur eine von vielen möglichen Ausgestaltungsformen der direkten Befestigung zu nennen.

### Legende zu den Hinweisziffern:

- 1: Platte
- 2: Gebäudewand
- 3: Tragkörper
- 4, 4': Befestigungsvorrichtung
- 5: Frontanschlag
- 6: Rückanschlag
- 7: Verstelleinrichtung
- 8: Abstand
- 9: Schiene
- 10: abgewandte Seite
- 11: zugewandte Seite
- 12: Haken
- 13: Grundkörper
- 14: Abstand
- 15: Schwenkgelenk
- 16: Dicke
- 17: abgewandte Oberfläche
- 18: gemeinsame Ebene
- 19: Abstand
- 20: Riegel
- 21: Schnittlinie
- 22: Vorspannfeder

## Patentansprüche

1. Anordnung zur Befestigung zumindest einer Platte (1) an einer Gebäudewand (2) zur Ausbildung einer Gebäudefassade, wobei die Anordnung zumindest einen Tragkörper (3) , an dem die Platte (1) befestigbar ist, aufweist und der Tragkörper (3) eine rahmenlose Konstruktion ist und zumindest eine Befestigungsvorrichtung (4) aufweist, mit der er an der Gebäudewand (2) befestigbar ist, wobei der Tragkörper (3) zumindest einen Frontanschlag (5) für die Platte (1) und zumindest einen Rückanschlag (6) für die Platte (1) aufweist und die Platte (1) zwischen dem Frontanschlag (5) und dem Rückanschlag (6) anordenbar, insbesondere einklemmbar, ist, **dadurch gekennzeichnet, dass** der Tragkörper (3) zumindest eine Verstelleinrichtung (7) aufweist, wobei mit der Verstelleinrichtung (7), vorzugsweise stufenlos, verschiedene Abstände (19) zwischen dem Frontanschlag (5) und dem Rückanschlag (6) einstellbar und fixierbar sind.

2. Anordnung nach Anspruch 1, **dadurch gekennzeichnet, dass** der Abstand (8) zwischen Frontanschlag (5) und Befestigungsvorrichtung (4) fix ist und/oder dass in einer Montagestellung der Anordnung an der Gebäudewand (2) der Frontanschlag (5) auf der von der Gebäudewand (2) abgewandten Seite (10) der Platte (1) und der Rückanschlag (6) auf der der Gebäudewand (2) zugewandten Seite (11) der Platte (1) angeordnet ist.

3. Anordnung nach Anspruch 1 oder 2, **dadurch gekennzeichnet, dass** der Frontanschlag (5) als Teil eines Hakens (12) ausgebildet ist.

4. Anordnung nach einem der Ansprüche 1 bis 3, **dadurch gekennzeichnet, dass** der Tragkörper (3) zumindest einen Grundkörper (13) aufweist, welcher die Befestigungsvorrichtung (4) aufweist, und dass der Rückanschlag (6) mittels der Verstelleinrichtung (7) relativ zum Grundkörper (13) in verschiedenen Positionen einstellbar und fixierbar ist.

5. Anordnung nach einem der Ansprüche 1 bis 4, **dadurch gekennzeichnet, dass** der Rückanschlag (6) als Leiste ausgebildet ist und/oder dass der zumindest eine Frontanschlag (5) fix an zumindest einem bzw. dem Grundkörper (13) des Tragkörpers (3) angeordnet ist, welcher die Befestigungsvorrichtung (4) aufweist.

6. Anordnung nach einem der Ansprüche 1 bis 5, **dadurch gekennzeichnet, dass** der Tragkörper (3) zumindest zwei, vorzugsweise in einander entgegen gesetzten Endbereichen des Tragkörpers (3) angeordnete, Frontanschläge (5) und zumindest einen, in einem Bereich zwischen den Frontanschlägen (5) angeordneten Rückanschlag (6) aufweist.

7. Anordnung nach Anspruch 6, **dadurch gekennzeichnet, dass** der Rückanschlag (6) sich über zumindest 50%, vorzugsweise über zumindest 80%, des Abstands (14) zwischen den beiden Frontanschlägen (5) erstreckt.

8. Anordnung nach einem der Ansprüche 1 bis 7, dass die Befestigungsvorrichtung (4) als Schwenkgelenk (15) oder als Teil eines Schwenkgelenkes (15) ausgebildet ist oder zumindest ein Schwenkgelenk (15) aufweist, wobei vorzugsweise vorgesehen ist, dass der Tragkörper (3) zusätzlich zumindest eine zweite Befestigungsvorrichtung (4') aufweist und die zweite Befestigungsvorrichtung (4') als eine Verriegelungseinrichtung oder als Teil einer Verriegelungseinrichtung ausgebildet ist oder zumindest eine Verriegelungseinrichtung aufweist.

9. Gebäudefassade mit zumindest einer Platte (1), vorzugsweise mit mehreren Platten (1), welche, vorzugsweise jeweils, mit zumindest einer Anordnung nach einem der Ansprüche 1 bis 8 an einer Gebäudewand (2) befestigt sind.

10. Gebäudefassade nach Anspruch 9, **dadurch gekennzeichnet, dass** die Platte (1) oder zumindest eine der Platten (1) ein Solarpaneel zur Erzeugung von elektrischem Strom und/oder von Warmwasser ist und/oder dass zumindest einige der Platten (1) verglichen miteinander unterschiedliche Dicken (16) aufweisen und ihre von der Gebäudewand (2) abgewandten Oberflächen (17) in einer gemeinsamen Ebene (18) liegen.
